# FASCICULE DE BREVET EUROPEEN

(11) **EP 1 952 687 B1**
(45) Date de publication et mention de la délivrance du brevet: **28.01.2015**
(21) Numéro de dépôt: 08300054.7
(22) Date de dépôt: 25.01.2008
(51) Int. Cl.: A01N 25/04

(54) **Emulsion comprenant un polysaccharide et son utilisation dans des compositions liquides pulvérisables**
Emulsion, die ein Polysaccharid enthält und ihre Verwendung in versprühbaren flüssigen Zusammensetzungen
Emulsion containing a polysaccharide and its use in sprayable liquid compositions

(30) Priorité: 26.01.2007 FR 0752917
(43) Date de publication de la demande: 06.08.2008
(73) Titulaire: COMPTOIR COMMERCIAL DES LUBRIFIANTS (C.C.L.), 60880 Le Meux (FR)
(72) Inventeur: Desplanques, Séverine, 59185 PROVIN (FR); Clausse, Danièle, 60200 COMPIEGNE (FR); Parmentier, Jacques, 60350 VIEUX MOULIN (FR); Paillisson, Philippe, 60200 COMPIEGNE (FR)
(74) Mandataire: Catherine, Alain

(56) Documents cités:
- EP-A- 0 502 764
- WO-A-2004/100661
- US-A1- 2006 008 495

## Description

La présente invention concerne de manière générale une émulsion de type eau dans huile, dans laquelle la phase aqueuse comprend un polysaccharide de haut poids moléculaire, et la phase huileuse comprend un tensioactif. Cette émulsion est particulièrement utile dans le cadre de la réalisation de compositions liquides pulvérisables également appelées bouillies, destinées en particulier au domaine agricole.

La demande internationale WO 2004/100661 décrit un concentrat pouvant se présenter sous forme d'une émulsion eau dans huile dont la phase aqueuse est un produit liquide de saccharide qui est principalement un sirop aqueux visqueux et concentré. Le saccharide est un monosaccharide, oligosaccharide ou un polysaccharide non tensio-actif. Cependant, ce document n'envisage pas l'emploi de polysaccharides de haut poids moléculaire, mais au contraire recommande l'emploi de monosaccharides et oligosaccharides de faible poids moléculaire.

La pulvérisation de compositions liquides ou de bouillies, pour le traitement des surfaces agricoles, présente des problèmes liés notamment à la taille des gouttelettes pulvérisées, ces problèmes ayant des effets directs sur la qualité de l'épandage. En effet, lorsque la taille des gouttelettes est faible, c'est à dire inférieure à 100µm celles-ci ont tendance à se disperser sous l'action du vent, ce qui diminue l'efficacité du traitement. A l'inverse lorsque les gouttelettes ont une taille plus importante, celles-ci ne se dispersent plus sous l'action du vent mais ont tendance à s'écouler de la surface à traiter, du fait de leur poids, à rebondir, ou à s'agréger, par un phénomène de coalescence.

Pour remédier à ces problèmes d'écoulement, de rebond et de coalescence des miscelles un système connu antérieurement a consisté à utiliser les propriétés des polysaccharides de hauts poids moléculaires pour leur tendance à gélifier à faible concentration les solutions aqueuses et bouillies de traitement s'opposant à tout écoulement parasite, au rebond des gouttelettes en amortissant en quelque sorte leur impact et enfin en augmentant l'adhérence de ces gouttelettes sur les surfaces foliaires à traiter.

Néanmoins, cette solution présente des inconvénients liés au fait que ces polysaccharides de hauts poids moléculaires se présentent sous forme de poudre à dissoudre dans l'eau au moment de la réalisation de la bouillie de traitement. La mise en solution par saupoudrage de la poudre dans l'eau de la bouillie à température ambiante nécessite un temps d'agitation conséquent ainsi que le déploiement de forces de cisaillement importantes pour solubiliser ces polymères particulièrement hydrophiles ayant tendance à former des grumeaux stables ne pouvant être délités que par élévation de température et contraintes importantes.

A titre d'exemple, la préparation d'une bouillie de traitement phytosanitaire se fait généralement à la ferme en dispersant dans l'eau les concentrés auto-émulsionnables de matières actives et d'adjuvant sous une très faible agitation généralement conséquent au recyclage par les pompes assurant la pulvérisation et ce à une température ambiante de 5 à 20°C, conditions qui sont en totale opposition à celles requises pour mettre en solution les polysaccharides de haut poids moléculaire.

Les utilisateurs finaux ne peuvent donc réaliser eux-même cette solution de polysaccharides, très solubles mais difficilement hydratables d'une façon homogène avec les matériels en usage dans leurs professions.

De plus, l'utilisation d'une composition concentrée à base de polysaccharides de haut poids moléculaire à diluer pour préparer une bouillie de traitement, n'est pas envisageable car ce type de composition concentrée développe très rapidement des viscosités importantes allant jusqu'aux gels très fermes se dispersant eux aussi avec beaucoup de difficultés, ne permettant pas de retrouver les concentrations recherchées dans la bouillie et tendant, par cette difficulté de dilution, à conserver des parties gélifiées risquant de colmater les filtres et les buses de pulvérisation des systèmes. A titre d'exemple, une solution de gomme de guar à 1% en poids présente déjà une viscosité de 2600 centipoises, 980 centipoises pour une solution à 1% en poids de gomme de xanthane et 1900 centipoises pour une solution à 1% en poids de carboxyméthylcellulose.

Il existe donc un besoin pour un moyen, en particulier une composition permettant de faciliter l'obtention d'une bouillie destinée à être pulvérisée, comprenant des polysaccharides de haut poids moléculaire en solution.

Par polysaccharide de haut poids moléculaire on entend un polysaccharide ayant une masse moléculaire d'au moins 500 000g/mole, de préférence de 500 000 à 2 000 000 g/mole.

Les masses molaires sont mesurées de manière classique par chromatographie par perméation sur gel (GPC)

Les buts ci-dessus sont atteints par une composition sous forme d'émulsion selon l'invention.

L'invention concerne une émulsion eau dans huile (E/H), stable vis-à-vis de la coalescence, comprenant une phase aqueuse dispersée dans une phase huileuse continue, dans laquelle :
a) la phase aqueuse dispersée renferme 1 à 10% de préférence 2 à 8% en poids, et mieux 2 à 4 %, d'au moins un polysaccharide ayant une masse molaire d'au moins 500 000g/mole, par rapport au poids total de la phase aqueuse ;
b) la phase huileuse continue est une huile ou un mélange d'huiles à laquelle est ajoutée de 0,1 à 5 % en poids, de préférence 0,5 à 4 % en poids, par rapport au poids total de la phase huileuse d'au moins un agent tensio-actif choisi parmi les phospholipides, les alcools gras éthoxylés, les esters de sucre, les alkylpolyglucosides, la caséine et leurs mélanges.

L'émulsion telle que définie ci-dessus facilite la réalisation d'une bouillie de traitement comprenant un polysaccharide de haut poids moléculaire sous forme dissoute, par rapport aux procédés d'incorporation de polysaccharides de haut poids moléculaire antérieurement connus et décrits ci-dessus.

Pour réaliser une bouillie de traitement à partir d'une émulsion telle que définie ci-dessus, on ajoute un agent de type polyéther glycol d'alcool gras à l'émulsion, puis le mélange obtenu, désigné « adjuvant » est incorporé à une composition liquide pulvérisable.

Ainsi, les polysaccharides de haut poids moléculaire dissous dans la phase aqueuse dispersée de l'émulsion se retrouvent également sous forme dissoute dans la composition liquide pulvérisable, ce qui évite une étape de dissolution d'une poudre à base de polysaccharide.

Par « stable vis-à-vis de la coalescence », on entend au sens de la présente invention qu'aucune séparation de phase n'est observée après trois mois de conservation de l'émulsion à 3°C.

Par « alcool gras éthoxylé », on entend au sens de l'invention des alcools comprenant une chaîne carbonée comprenant 4 à 24 atomes de carbone, de préférence 12 à 20 atomes de carbone, de manière tout à fait préférée, 14, 16 ou 18 atomes de carbone et au moins un groupement oxéthyle de formule -OC₂H₅.

Par « ester de sucre » on entend au sens de la présente invention, les produits de l'estérification d'un sucre choisi parmi le sorbitol, le fructose, le glucose, le galactose, le lactose, le maltose, ou le saccharose avec un acide gras choisi parmi l'acide oléique, l'acide caprylique, l'acide myristique, l'acide stéarique, l'acide palmitique, l'acide linoléique, l'acide laurique, ou l'acide caprique.

Sont également des « esters de sucre » au sens de la présente invention, les produits de la transestérification d'un sucre tel que défini ci-dessus avec un ester choisi parmi le stéarate de méthyle, le stéarate d'éthyle, le chlorure de palmitoyle, le palmitate de méthyle, l'octanoate de méthyle ou l'oléate de méthyle.

De préférence, les alkylpolyglucosides ou APG sont choisis parmi les decylglucosides, laurylglucosides, cétostearylglucosides, arachidylglucosides et leurs mélanges.

De préférence, le(s) phospholipide(s) est (sont) choisi(s) parmi les phosphatidyl-cholines (lécithines), les phosphatidyl-éthanolamines, les phosphatidyl-sérines, les phosphatidyl-inositols, les phosphatidyl-glycérols et leurs mélanges.

De manière tout à fait préférée, le phospholipide est une lécithine de soja.

Le(s) phospholipide(s) est (sont) choisis, de préférence parmi les phospholipides d'huile de soja, d'huile de tournesol, d'huile de colza, d'huile de pépins de raisin, d'huile d'arachide, d'huile d'olive, d'huile de canola, d'huile de carthame, d'huile de coprah, d'huile de germe de blé, d'huile de maïs, d'huile de noix, d'huile d'amande, d'huile de palme, d'huile de sésame et leurs mélanges.

Le(s) polysaccharide(s de haut poids moléculaire est (sont) choisi(s) préférentiellement parmi les celluloses, les alkylcelluloses, les carboxyalkylcelluloses, notamment les carboxyméthylcelluloses, les carragénanes, la chitine, les chitosanes, les cyclodextrines, les dextrines, l'amidon, l'agar, la gomme de guar, la gomme de xanthane, la gomme arabique et leurs mélanges.

De manière tout à fait préférée, le(s) polysaccharide(s) est (sont) choisi(s) parmi les carboxyméthylcelluloses de masse moléculaire élevée, par exemple de 1 000 000 à 1 300 000 g/mole, la gomme de guar et la gomme de xanthane de masse molaire de 1 000 000 à 2 000 000 g/mole, conférant à faible concentration des rhéologies spécifiques propres à ces polymères, les propriétés d'adhérence, d'anti-rebond, s'opposant par des seuils d'écoulement très marqués à la coalescence des gouttes et leur écoulement.

L'huile peut être une huile animale, par exemple une oléine animale, une huile végétale ou un mélange d'huile animale et d'huile végétale.

L'huile est de préférence une huile végétale choisie parmi les huiles végétales naturelles et les huiles végétales modifiées, et par exemple parmi l'huile de soja, l'huile de tournesol, l'huile de colza, l'huile de pépins de raisin, l'huile d'arachide, l'huile d'olive, l'huile de canola, l'huile de carthame, l'huile de coprah, l'huile de germe de blé, l'huile de maïs, l'huile de noix, l'huile d'amande, l'huile de palme, l'huile de sésame et leurs mélanges.

De manière préférée, l'huile est une huile végétale modifiée notamment une huile estérifiée, en particulier un ester d'huile de colza, un ester d'huile de tournesol, un ester d'huile de tournesol oléique ou un ester d'huile de soja. A titre d'exemple, un ester méthylique d'huile de colza convient pour la réalisation d'une émulsion conforme à l'invention.

L'utilisation d'une huile permet de réaliser la phase continue de l'émulsion, et lorsqu'une telle émulsion est ajoutée à une composition liquide pulvérisable ou bouillie, l'huile facilite également l'action des matières actives, telles que les fongicides, ou insecticides contenus dans la bouillie.

La phase aqueuse dispersée peut en outre comprendre un conservateur.

Le rapport pondéral phase aqueuse dispersée/phase huileuse continue varie de 10/90 à 90/10 et est de préférence de 50/50.

Les gouttelettes de la phase aqueuse dispersée ont un diamètre compris entre 1 et 100 µm, et par exemple un diamètre moyen de 10, 20, 30, 40, 50, 60, 70, 80, 90 ou 100 µm. De manière préférée, les gouttelettes de la phase aqueuse ont un diamètre inférieur à 60 µm.

L'émulsion définie ci-dessus permet d'apporter de manière simple un polysaccharide sous forme dissoute dans une composition liquide à pulvériser, par exemple une bouillie de traitement phytosanitaire. Une telle bouillie présente alors les avantages définis ci-dessus, à savoir la capacité à générer des gouttelettes d'une taille importante à partir de la bouillie, qui ne s'écoulent pas sous leur propre poids depuis la surface sur laquelle elles sont déposées, et qui ne rebondissent pas de la surface sur laquelle elles sont déposées.

L'invention concerne également un procédé de fabrication d'une émulsion eau dans huile telle que définie ci-dessus, comprenant les étapes successives suivantes :
- ajouter à de l'eau au moins un polysaccharide ayant une masse molaire d'au moins 500 000 g/mole, de préférence 500 000 à 2 000 000 g/mole, de manière à obtenir une phase aqueuse contenant 1 à 10%, de préférence 2 à 8%, et mieux encore 2 à 4% en poids de polysaccharide ;
- incorporer dans au moins une huile à température ambiante, de 0,1 à 5 %, de préférence 0,5 à 4 % en poids, par rapport au poids total de la phase huileuse d'au moins un agent tensio-actif,
- agiter le mélange obtenu , à une température de 40° à 70°C, de préférence de 55° à 65° C; et
- ajouter, à température ambiante, la phase aqueuse à la phase huileuse et disperser la phase aqueuse dans la phase huileuse.

De préférence, la dispersion de la phase aqueuse dans la phase huileuse comprend une première étape d'incorporation et de dispersion à une vitesse de 1000 à 5000 t/min suivie d'une seconde étape de dispersion à une vitesse de 10 000 à 20 000 t/min.

De préférence, le mélange d'agent(s) tensio-actif(s) et d'huile(s) est agité pendant une durée de 2 à 5 minutes, et de manière tout à fait préférée pendant 3 à 4 minutes afin d'obtenir la solubilisation du phospholipide. Après ce délai, la température du mélange est d'environ 60°C.

L'émulsion 50/50 dont la phase aqueuse contient de la carboxyméthylcellulose, ainsi obtenue, présente une viscosité de 80 cP pour une vitesse de cisaillement 170s⁻¹, et une viscosité de 35 cP pour une vitesse de cisaillement de 3000s⁻¹.

L'invention concerne également un procédé de fabrication d'un adjuvant pour composition aqueuse pulvérisable, comprenant les étapes suivantes :
a. l'addition à 100 parties en poids d'une émulsion eau dans huile selon l'invention, de 5 à 15 parties en poids, de préférence 8 à 10 parties en poids d'un agent choisi parmi les polyéther glycols d'alcools gras ; et
b. la dispersion dudit agent dans l'émulsion.

L'invention a également pour objet un adjuvant pour composition aqueuse pulvérisable comprenant une émulsion eau dans huile telle que définie ci-dessus, (contenant un polysaccharide de haut poids moléculaire), et 5 à 15% en poids, de préférence 8 à 10 % en poids, par rapport au poids total de l'adjuvant, d'un agent choisi parmi les polyéther glycols d'alcools gras.

A titre de polyéther glycol d'alcool gras pouvant être utilisé, on peut citer un Oleyl/cetyl alcool polyglycol ether comprenant 5 unités oxyde d'éthylène, et par exemple le produit EMULSOGEN M® commercialisé par la société CLARIANT. L'ajout de polyéther glycol d'alcool gras permet notamment de fluidifier l'émulsion objet de l'invention, et de faciliter son incorporation dans une composition liquide pulvérisable. L'ajout de polyéther glycol d'alcool gras facilite également le passage des polysaccharides de haut poids moléculaire dans la composition aqueuse pulvérisable.

A titre d'exemple de composition aqueuse pulvérisable, on peut citer les bouillies comprenant des produits phytosanitaires. De telles bouillies peuvent être mises en oeuvre dans le domaine agricole, pour la viticulture, l'arboriculture, le maraîchage, l'horticulture, et de manière générale dans tous les domaines agricoles dans lesquels des compositions liquides destinées à être pulvérisées sont utilisées.

L'émulsion et l'adjuvant conformes à l'invention peuvent également être utilisés pour réaliser des compositions aqueuses destinées à l'irrigation ou à l'arrosage de surface engazonnées, et plus généralement à l'irrigation ou à l'arrosage de tout type de plantes ornementales ou destinées à l'agriculture.

Des produits phytosanitaires peuvent être choisis parmi les herbicides, les désherbants, les phytocides, les débroussaillants, les fongicides, les insecticides, les acaricides, les substances de croissance, tel que les régulateurs de croissance permettant de prévenir la croissance excessive d'une plante, les anti-germinants, les produits favorisant la résistance des plantes, le bouturage, ou la mise en fruit, mais également les molluscicides, nématicides, rodenticides, et taupicides.

Selon un mode de réalisation particulier de l'invention, les étapes a. et b. sont réalisées extemporanément, au moment de l'utilisation de l'adjuvant.

L'invention a également pour objet un procédé de fabrication d'une composition aqueuse pulvérisable, comprenant une étape de dilution dans l'eau d'un adjuvant tel que défini ci-dessus, ledit adjuvant comprenant 0,001 à 1% en poids par rapport au poids de l'adjuvant d'un polysaccharide de masse molaire d'au moins 500 000 g/mol de sorte à pour obtenir une composition aqueuse pulvérisable ayant une teneur spécifiée en polysaccharide de haut poids moléculaire, ladite composition aqueuse présentant une taille de gouttelettes de taille comprise entre 200 et 600 µm.

Le procédé de fabrication de la composition aqueuse pulvérisable, qui généralement contient un produit phytosanitaire, ne requiert pas l'utilisation de moyens mécaniques et thermiques spécifiques autres que les pompes assurant la pulvérisation, y compris pour les étapes a et b d'obtention de l'adjuvant.

L'étape de dissolution dans l'eau conduit à une solution homogène de polysaccharides de haut poids moléculaire dans l'eau par rupture de l'émulsion eau dans huile initiale.

De préférence, l'adjuvant est dilué dans l'eau de sorte à obtenir une concentration en poids de polysaccharide de haut poids moléculaire dans l'eau allant de 0,001% à 1%.

La composition aqueuse pulvérisable obtenue selon le procédé décrit ci-dessus, dans laquelle a été incorporée l'émulsion objet de l'invention permet de réaliser une pulvérisation sous forme de gouttelettes dont la taille est supérieure à 100µm, et de préférence comprise entre 100µm et 600µm, et mieux encore comprise entre 200 et 400µm sans pour autant que l'on observe un phénomène de rebond des gouttelettes, une diminution de l'adhérence de ces gouttelettes sur les surfaces à traiter ou un phénomène de coalescence.

La suite de la description se réfère aux figures annexées sur lesquelles sont représentées respectivement :

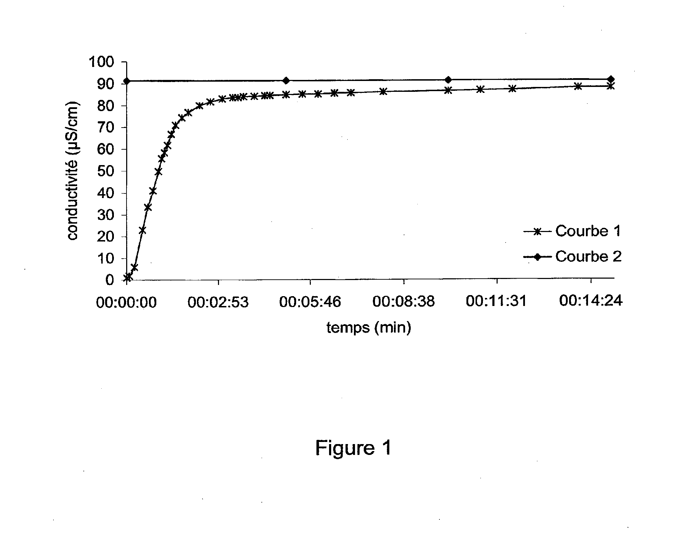

Figure 1 : 2 courbes (notées courbe 1 et courbe 2) illustrant respectivement la conductivité (exprimée en µS/cm) en fonction du temps (exprimé en minutes), de deux compositions (composition 1, et 2) définies dans l'exemple 2, à 24°C.

L'invention est en outre illustrée par les exemples non limitatifs suivants.

### Exemple 1: Réalisation d'une émulsion conforme à l'invention

### 1) Formulation :

Phase dispersée : 50% p/p
- eau distillée
- polysaccharide (Ceroga 4570M (carboxymethylcellulose, Roeper) à 3,20% p/p
- conservateur kathon MK (nitrate de magnésium 20-30% et mélange de 5-chloro-2-methyl-2H-isothiazol-3-one et 2-methyl-2H-isiothiazol-3-one (3 :1) 1-3%, SPCI) à 0,04% p/p

Phase continue : 50% p/p
- huile: Methyl oleate type P (esters méthyliques de colza, Mosselman) : 46% p/p. Viscosité de 6,84cP et densité de 0,89 à 20°C.
- tensioactif : Emulmetik 300 (lécithine de soja, Lucas Meyer) : 4% p/p.

### 2) Préparation

La lécithine de soja est solubilisée sous agitation avec un barreau magnétique dans l'huile à 60°C. La phase aqueuse est additionnée à 3000 rpm (ultra-turrax) de manière à obtenir une dispersion grossière eau dans huile. Cette dispersion est ensuite affinée à 15000 rpm (ultra-turrax).

### 3) Caractérisation

L'émulsion obtenue est de couleur blanche et épaisse. L'émulsion étant concentrée, le sens de l'émulsion est déterminé par la technique de la DSC (differential scanning calorimetry) qui permet de caractériser l'état de dispersion de l'eau. Le type de l'émulsion est bien eau dans huile. A température ambiante, on observe une sédimentation de l'émulsion qui peut être limitée par conservation au froid. Une augmentation de la taille des gouttes apparaît au bout de deux mois à température ambiante.

### Exemple 2: Obtention d'une solution aqueuse de polysaccharide

### 1) Ajout de l'additif.

L'émulsogen M (Oleyl/cetyl alcool polyglycol éther comprenant 5 unités Oxyde d'éthylène, Clariant), est ajouté à une concentration de 10% p/p dans l'émulsion eau dans huile de l'exemple 1. Le mélange est ensuite homogénéisé avec un barreau magnétique. Le mélange obtenu est plus fluide que l'émulsion.

### 2) Dilution

Le mélange défini ci-dessus est dilué à 2% p/p dans de l'eau distillée et agité à 400 rpm avec un barreau magnétique. La vitesse d'agitation dépend du volume à agiter, une valeur de 500 rpm est utilisée pour agiter 100 g d'eau.

### 3) Caractérisation

La lécithine, la carboxymethylcellulose et le conservateur lorsqu'ils sont mis en solution dans de l'eau présentent la propriété d'être des molécules chargées, entraînant une modification de la conductivité de l'eau.

Par conséquent, pour déterminer si la carboxymethylcellulose entrant dans la composition de l'émulsion définie dans l'exemple 1 est sous forme dissoute dans la bouillie, la conductivité de deux compositions a été mesurée :
- la composition 1 comprend 2g du mélange émulsion de l'exemple 1 + additif de type EMULSOGEN M® ajoutés à 98g d'eau à température ambiante,
- la composition 2 est une solution de polysaccharide, de conservateur, et de lécithine dans de l'eau, ladite composition comprenant une quantité de polysaccharide, de conservateur, de lécithine et d'eau identiques à celles de la composition 1.

Chaque composition est introduite dans un bécher dans lequel plonge une cellule de conductivité. Il s'agit d'une cellule de conductivité à 2 pôles platinés avec sonde de température intégrée, commercialisée par Radiometer Analytical, sous la dénomination commerciale CDC141T. Chaque composition est soumise à une faible agitation de 400rpm avec un barreau magnétique. La conductivité de chaque composition en fonction du temps est illustrée sur la figure 1. Les courbes 1 et 2 illustrent respectivement la conductivité des compositions 1 et 2.

On observe sur la courbe 1 que, très rapidement, après 3 min environ, la composition 1 présente une conductivité élevée traduisant la présence du polysaccharide chargé, de la lécithine et du conservateur sous forme dissoute, dans la composition 1.

La conductivité de la composition 1 est de 88,3 µS/cm et la conductivité de la composition 2 est de 91,4 µS/cm. L'écart entre ces deux valeurs est de 3,1 µS/cm. On peut donc considérer que tout le polysaccharide est présent dans la solution aqueuse.

## Revendications

1. Emulsion eau dans huile (E/H), stable vis-à-vis de la coalescence, comprenant une phase aqueuse dispersée dans une phase huileuse continue, dans laquelle :
a) la phase aqueuse dispersée renferme 1 à 10% en poids, d'au moins un polysaccharide, de masse molaire d'au moins 500 000 g/mole, par rapport au poids total de la phase aqueuse
b) la phase huileuse continue est une huile ou un mélange d'huiles à laquelle est ajoutée de 0,1 à 5 % en poids par rapport au poids total de la phase huileuse d'au moins un agent tensio-actif choisi parmi les phospholipides, les alcools gras éthoxylés, les esters de sucre, les alkylpolyglucosides, la caséine et leurs mélanges.

2. Emulsion eau dans huile selon la revendication 1, **caractérisée en ce que** le(s) phospholipide(s) est (sont) choisi(s) parmi les phosphatidyl-cholines (lécithines), les phosphatidyl-éthanolamines, les phosphatidyl-sérines, les phosphatidyl-inositols, les phosphatidyl-glycérols, et leurs mélanges.

3. Emulsion eau dans huile selon la revendication 2, caractérisée en que le(s) phospholipide(s) est (sont) choisis, parmi les phospholipides d'huile de soja, d'huile de tournesol, d'huile de colza, d'huile de pépins de raisin, d'huile d'arachide, d'huile d'olive, d'huile de canola, d'huile de carthame, d'huile de coprah, d'huile de germe de blé, d'huile de maïs, d'huile de noix, d'huile d'amande, d'huile de palme, d'huile de sésame et leurs mélanges.

4. Emulsion eau dans huile selon l'une quelconque des revendications 1 à 3, **caractérisée en ce que** le(s) polysaccharide(s) est (sont) choisi(s) parmi les celluloses, les alkylcelluloses, les carboxyalkylcelluloses" les carragénanes, la chitine, les chitosanes, les cyclodextrines, les dextrines, l'amidon, l'agar, la gomme de guar, la gomme de xanthane, la gomme arabique et leurs mélanges.

5. Emulsion eau dans huile selon l'une quelconque des revendications 1 à 4, **caractérisée en ce que** l'huile est une huile végétale choisie parmi les huiles végétales naturelles et les huiles végétales modifiées.

6. Emulsion eau dans huile selon l'une quelconque des revendications précédentes, **caractérisée en ce que** le rapport pondéral phase aqueuse dispersée/phase huileuse continue varie de 90/10 à 10/90.

7. Emulsion eau dans huile selon l'une quelconque des revendications précédentes, **caractérisée en ce que** les gouttelettes de la phase aqueuse dispersées ont un diamètre compris entre 1 et 100 µm.

8. Adjuvant pour composition aqueuse pulvérisable **caractérisé en ce qu'**il comprend une émulsion eau dans huile selon l'une quelconque des revendications précédentes, et 5 à 15% en poids, par rapport au poids total de l'adjuvant, d'un agent choisi parmi les polyéthers glycols d'alcools gras.

9. Procédé de fabrication d'une émulsion eau dans huile selon l'une quelconque des revendications précédentes, **caractérisé en ce qu'**il comprend les étapes successives suivantes :
- ajouter à de l'eau au moins un polysaccharide de masse molaire d'au moins 500 000 g/mole, de manière à obtenir une phase aqueuse contenant 1 à 10%en poids de polysaccharide ;
- incorporer dans au moins une huile à température ambiante, de 0,1 à 5 %, en poids, par rapport au poids total de la phase huileuse d'au moins un agent tensio-actif,
- agiter le mélange obtenu, à une température de 40° à 70°C,; et
- ajouter, à température ambiante, la phase aqueuse à la phase huileuse et disperser la phase aqueuse dans la phase huileuse, pour obtenir ladite émulsion.

10. Procédé de fabrication selon la revendication 9, **caractérisé en ce que** la dispersion de la phase aqueuse dans la phase huileuse comprend une première étape d'incorporation et de dispersion à une vitesse de 1000 à 5000 t/min suivie d'une seconde étape de dispersion à une vitesse de 10 000 à 20 000 t/min.

11. Procédé de fabrication d'un adjuvant pour composition aqueuse pulvérisable, **caractérisé en ce qu'**il comprend les étapes suivantes :
a. l'addition à 100 parties en poids d'une émulsion eau dans huile selon l'une quelconque des revendications 1 à 7, de 5 à 15 parties en poids, d'un agent choisi parmi les polyéthers glycols d'alcools gras ; et
b. la dispersion dudit agent dans l'émulsion.

12. Procédé de fabrication selon la revendication 11, **caractérisé en ce que** les étapes a. et b. sont réalisées extemporanément, au moment de l'utilisation de l'adjuvant.

13. Procédé de fabrication d'une composition aqueuse pulvérisable, **caractérisé en ce qu'**il comprend une étape de dilution dans l'eau d'un adjuvant tel que préparé selon la revendication 11, ledit adjuvant comprenant 0,001 à 1% en poids par rapport au poids de l'adjuvant d'un polysaccharide de masse molaire d'au moins 500 000 g/mol de sorte à obtenir une composition aqueuse pulvérisable ayant une teneur spécifiée en polysaccharide, ladite composition aqueuse présentant une taille de gouttelettes de taille comprise entre 200 et 600 µm.

14. Procédé de fabrication selon la revendication 13, **caractérisé en ce que** l'étape de dilution dans l'eau comprend la libération dans l'eau de polysaccharide par rupture de l'émulsion eau dans l'huile.

15. Procédé selon la revendication 13 ou 14, **caractérisé en ce que** la fabrication de la composition aqueuse, y compris les étapes a et b de préparation de l'adjuvant telles que définies dans la revendication 11, sont réalisées sans moyens mécaniques et thermiques autres que les pompes assurant la pulvérisation.

## Patentansprüche

1. Koaleszenzstabile Wasser-in-Öl(w/o)-Emulsion, die eine wässrige Phase umfasst, welche in einer kontinuierlichen Ölphase dispergiert ist, wobei:
a) die dispergierte wässrige Phase 1 bis 10 Gew.-% wenigstens eines Polysaccharids mit einer Molmasse von wenigstens 500 000 g/mol umfasst, bezogen auf das Gesamtgewicht der wässrigen Phase;
b) die kontinuierliche Ölphase ein Öl oder ein Gemisch von Ölen ist, dem 0,1 bis 5 Gew.-%, bezogen auf das Gesamtgewicht der Ölphase, wenigstens eines Tensids hinzugefügt sind, das aus Phospholipiden, ethoxylierten Fettalkoholen, Zuckerestern, Alkylpolyglucosiden, Casein und Gemischen davon ausgewählt ist.

2. Wasser-in-Öl-Emulsion gemäß Anspruch 1, **dadurch gekennzeichnet, dass** das oder die Phospholipide aus Phosphatidylcholinen (Lecithinen), Phosphatidylethanolaminen, Phosphatidylserinen, Phosphatidylinositen, Phosphatidylglycerinen und Gemischen davon ausgewählt sind.

3. Wasser-in-Öl-Emulsion gemäß Anspruch 2, **dadurch gekennzeichnet, dass** das oder die Phospholipide aus Phospholipiden von Sojaöl, Sonnenblumenöl, Rapsöl, Traubenkernöl, Erdnussöl, Olivenöl, Canolaöl, Färberdistelöl, Kokosöl, Weizenkeimöl, Maisöl, Nussöl, Mandelöl, Palmöl, Sesamöl und Gemischen davon ausgewählt sind.

4. Wasser-in-Öl-Emulsion gemäß einem der Ansprüche 1 bis 3, **dadurch gekennzeichnet, dass** das oder die Polysaccharide aus Cellulosen, Alkylcellulosen, Carboxyalkylcellulosen, Carrageenen, Chitin, Chitosanen, Cyclodextrinen, Dextrinen, Stärke, Agar, Guarkernöl, Xanthan, Gummi arabicum und Gemischen davon ausgewählt sind.

5. Wasser-in-Öl-Emulsion gemäß einem der Ansprüche 1 bis 4, **dadurch gekennzeichnet, dass** das Öl ein Pflanzenöl ist, das aus natürlichen Pflanzenölen und modifizierten Pflanzenölen ausgewählt ist.

6. Wasser-in-Öl-Emulsion gemäß einem der vorstehenden Ansprüche, **dadurch gekennzeichnet, dass** das Gewichtsverhältnis von dispergierter wässriger Phase zu kontinuierlicher Ölphase von 90/10 bis 10/90 variiert.

7. Wasser-in-Öl-Emulsion gemäß einem der vorstehenden Ansprüche, **dadurch gekennzeichnet, dass** die Tröpfchen der dispergierten wässrigen Phase einen Durchmesser zwischen 1 und 100 µm aufweisen.

8. Additiv für eine sprühfähige wässrige Zusammensetzung, **dadurch gekennzeichnet, dass** es eine Wasser-in-Öl-Emulsion gemäß einem der vorstehenden Ansprüche und 5 bis 15 Gew.-%, bezogen auf das Gesamtgewicht des Additivs, eines aus Polyetherglycolen von Fettalkoholen ausgewählten Mittels umfasst.

9. Verfahren zur Herstellung einer Wasser-in-Öl-Emulsion gemäß einem der vorstehenden Ansprüche, **dadurch gekennzeichnet, dass** es die folgenden aufeinanderfolgenden Schritte umfasst:
- Hinzufügen wenigstens eines Polysaccharids mit einer Molmasse von wenigstens 500 000 g/mol zu Wasser, so dass man eine wässrige Phase erhält, die 1 bis 10 Gew.-% Polysaccharid enthält;
- Einarbeiten von 0,1 bis 5 Gew.-%, bezogen auf das Gesamtgewicht der Ölphase, wenigstens eines Tensids in wenigstens ein Öl von Umgebungstemperatur;
- Rühren des erhaltenen Gemischs bei einer Temperatur von 40 bis 70 °C; und
- Hinzufügen der wässrigen Phase zu der Ölphase bei Umgebungstemperatur und Dispergieren der wässrigen Phase in der Ölphase, wobei man die Emulsion erhält.

10. Herstellungsverfahren gemäß Anspruch 9, **dadurch gekennzeichnet, dass** das Dispergieren der wässrigen Phase in der Ölphase einen ersten Schritt des Einarbeitens und Dispergierens mit einer Geschwindigkeit von 1000 bis 5000 U/min und danach des Dispergierens mit einer Geschwindigkeit von 10 000 bis 20 000 U/min umfasst.

11. Verfahren zur Herstellung eines Additivs für eine sprühfähige wässrige Zusammensetzung, **dadurch gekennzeichnet, dass** es die folgenden Schritte umfasst:
a. Hinzufügen von 5 bis 15 Gewichtsteilen eines Mittels, das aus Polyetherglycolen von Fettalkoholen ausgewählt ist, zu 100 Gewichtsteilen einer Wasser-in-Öl-Emulsion gemäß einem der Ansprüche 1 bis 7; und
b. Dispergieren des Mittels in der Emulsion.

12. Herstellungsverfahren gemäß Anspruch 11, **dadurch gekennzeichnet, dass** die Schritte a. und b. erst bei Bedarf kurz vor Gebrauch des Additivs durchgeführt werden.

13. Verfahren zur Herstellung einer sprühfähigen wässrigen Zusammensetzung, **dadurch gekennzeichnet, dass** es einen Schritt des Verdünnens eines gemäß Anspruch 11 hergestellten Additivs in Wasser umfasst, wobei das Additiv 0,001 bis 1 Gew.-%, bezogen auf das Gewicht des Additivs, eines Polysaccharids mit einer Molmasse von wenigstens 500 000 g/mol umfasst, wobei man eine sprühfähige wässrige Zusammensetzung mit einem bestimmten Gehalt an Polysaccharid erhält, wobei die wässrige Zusammensetzung eine Tröpfchengröße zwischen 200 und 600 µm aufweist.

14. Herstellungsverfahren gemäß Anspruch 13, **dadurch gekennzeichnet, dass** der Schritt des Verdünnens in Wasser die Freisetzung von Polysaccharid in Wasser durch Brechen der Wasser-in-Öl-Emulsion umfasst.

15. Verfahren gemäß Anspruch 13 oder 14, **dadurch gekennzeichnet, dass** die Herstellung der wässrigen Zusammensetzung einschließlich der Schritte a. und b. der Herstellung des Additivs, wie sie in Anspruch 11 definiert sind, ohne mechanische und thermische Mittel außer den Pumpen, die für das Sprühen sorgen, durchgeführt werden.

## Claims

1. Water-in-oil (W/O) emulsion stable to coalescence, comprising an aqueous phase dispersed in a continuous oil phase, wherein:
a) the dispersed aqueous phase includes 1 to 10% by weight of at least one polysaccharide having a molar mass of at least 500,000 g/mole, based on the total weight of the aqueous phase;
b) the continuous oil phase is an oil or an oil mixture to which is added from 0,1 to 5% by weight based on the total weight of the oil phase of at least one surfactant selected from phospholipids, ethoxylated fatty alcohols, sugar esters, alkylpolyglucosides, casein and mixtures thereof.

2. Water-in-oil emulsion according to claim 1, **characterized in that** the phospholipid(s) is (are) selected from phosphatidyl cholines (lecithins), phosphatidyl ethanolamines, phosphatidyl serines, phosphatidyl inositols, phosphatidyl glycerols, and mixtures thereof.

3. Water-in-oil emulsion according to claim 2, **characterized in that** the phospholipid(s) is (are) selected from the soya oil, sunflower oil, rapeseed oil, grape seed oil, groundnut oil, olive oil, canola oil, safflower oil, copra oil, wheat germ oil, corn oil, walnut oil, almond oil, palm oil, sesame oil phospholipids, and mixtures thereof.

4. Water-in-oil emulsion according to any one of claims 1 to 3, **characterized in that** the polysaccharide(s) is (are) selected from celluloses, alkylcelluloses, carboxyalkylcelluloses, carrageenans, chitin, chitosans, cyclodextrins, dextrins, starch, agar, guar gum, xanthan gum, gum arabic and mixtures thereof.

5. Water-in-oil emulsion according to any one of claims 1 to 4, **characterized in that** the oil is a vegetable oil selected from natural vegetable oils and modified vegetable oils.

6. Water-in-oil emulsion according to any one of the preceding claims, **characterized in that** the weight ratio dispersed aqueous phase/continuous oil phase is ranging from 90/10 to 10/90.

7. Water-in-oil emulsion according to anyone of the preceding claims, **characterized in that** the droplets of the dispersed aqueous phase have a diameter comprised between 1 and 100 µm.

8. Adjuvant for sprayable aqueous composition, **characterized in that** it comprises a water-in-oil emulsion according to any one of the preceding claims, and 5 to 15% by weight, based on the total weight of the adjuvant, of an agent selected from fatty alcohol polyether glycols.

9. Process for manufacturing a water-in-oil emulsion according to any one of the preceding claims, **characterized in that** it comprises the following successive steps:
- add to water at least one polysaccharide having a molar mass of at least 500,000 g/mole, in order to obtain an aqueous phase containing 1 to 10% by weight of polysaccharide;
- incorporate into at least one oil at room temperature, from 0.1 to 5% by weight, based on the total weight of the oil phase, of at least one surfactant,
- stir the obtained mixture at a temperature of from 40 to 70°C; and
- add, at room temperature, the aqueous phase to the oil phase and disperse the aqueous phase into the oil phase in order to obtain said emulsion.

10. Process of manufacture according to claim 9, **characterized in that** the dispersion of the aqueous phase into the oil phase comprises a first step of incorporation and dispersion at a rate of from 1000 to 5000 rpm, followed by a second step of dispersion at a rate of from 10,000 to 20,000 rpm.

11. Process for manufacturing an adjuvant for sprayable aqueous composition, **characterized in that** it comprises the following steps:
a. adding to 100 parts by weight of a water-in-oil emulsion according to any one of claims 1 to 7, from 5 to 15 parts by weight, of an agent selected from fatty alcohol polyether glycols; and
b. dispersing said agent into the emulsion.

12. Process of manufacture according to claim 11, **characterized in that** the steps a. and b. are performed extemporaneously, at the time of use of the adjuvant.

13. Process for manufacturing a sprayable aqueous composition, **characterized in that** it comprises a step of diluting in water an adjuvant such as prepared according to claim 11, said adjuvant comprising 0.001 to 1% by weight, based on the weight of the adjuvant, of a polysaccharide with a molar mass of at least 500,000 g/mol, in order to obtain a sprayable aqueous composition having a specified polysaccharide content, said aqueous composition having a droplet size comprised between 200 and 600 µm.

14. Process of manufacture according to claim 13, **characterized in that** the water dilution step comprises the release in water of polysaccharide by breaking of the water-in-oil emulsion.

15. Process according to claim 13 or 14, **characterized in that** the aqueous composition manufacture, including the steps a and b of the preparation of the adjuvant such as defined in claim 11, are performed without mechanical and thermal means other than the pumps ensuring the spraying.
